Europäisches Patentamt

European Patent Office

Office européen des brevets

(19)

(11) **EP 0 890 868 A1**

(12) **DEMANDE DE BREVET EUROPEEN**

(43) Date de publication:
**13.01.1999 Bulletin 1999/02**

(51) Int. Cl.$^6$: **G02F 1/1341**, G02F 1/161

(21) Numéro de dépôt: 97111429.3

(22) Date de dépôt: **08.07.1997**

(84) Etats contractants désignés:
**AT BE CH DE DK ES FI FR GB GR IE IT LI LU MC NL PT SE**
Etats d'extension désignés:
**AL LT LV SI**

(71) Demandeur: **ASULAB S.A.**
**CH-2501 Bienne (CH)**

(72) Inventeurs:
• **Ruedin, Yves**
**2072 Saint-Blaise (CH)**

• **Sallin, Michel**
**2072 Saint-Blaise (CH)**

(74) Mandataire:
**Thérond, Gérard Raymond et al**
**I C B**
**Ingénieurs Conseils en Brevets SA**
**Rue des Sors 7**
**2074 Marin (CH)**

(54) **Procédé de fabrication d'un lot de cellules lamellaires et cellules ainsi obtenues**

(57)     Fabrication par un lot de cellules lamellaires dont l'espacement est maintenu constant au moyen d'espaceurs (11) de diamètre d, consistant à :

-   former sur un substrat (1), avec un thermofusible un premier cordon pour les cadres (3) et des portions de jonction (5) entre les orifices (6) d'écartement e et un deuxième cordon (7) fermé à une extrémité (8) pour créer une nourrice (9), lesdits cordons ayant une section constante So et une hauteur h;
-   déposer sur le substrat (1) les espaceurs (11) et près des orifices (6) des espaceurs (12) destructibles ou déformables de diamètre D tel que h > D > d;
-   sceller un deuxième substrat (2) plan déformable avec une pression réduite au droit des orifices (6);
-   remplir toutes les cellules;
-   exercer une deuxième pression égale ou supérieure à la première en chauffant les zones au droit des orifices à une température égale ou supérieure à celle du thermofusible; et
-   couper chaque cellule.

Fig. 1

EP 0 890 868 A1

Fig. 2a

Fig. 2b

Fig. 2c

## Description

La présente invention concerne un procédé de fabrication d'un lot de cellules lamellaires et les cellules ainsi obtenues après qu'elles aient été isolées les unes des autres d'un substrat plan commun ayant servi à leur fabrication.

Plus particulièrement, l'invention concerne un procédé permettant de rendre plus simple, et donc plus économique, la fabrication de cellules lamellaires par lot, plus particulièrement au niveau de l'étape d'obturation après remplissage simultané de toutes les cellules d'un même lot avec un matériau liquide actif.

L'invention concerne également les cellules lamellaires ainsi obtenues après qu'elles aient été individuellement séparées du lot de fabrication.

Par "cellule lamellaire" on entend, au sens de la présente invention, toute structure scellée formée de deux plaquettes dont l'une au moins est transparente, l'espace ainsi délimité étant rempli d'un liquide, ledit liquide étant généralement un matériau actif, comme c'est le cas dans les cellules d'affichage à cristaux liquides ou dans les cellules photoélectrochimiques. Lorsque ces cellules lamellaires sont de petites dimensions, il est économiquement intéressant de les fabriquer, non pas à l'unité, mais par lot à partir d'un substrat commun puis de les découper pour les utiliser ensuite individuellement dans les appareils auxquels elles sont destinées.

Pour fabriquer une cellule lamellaire, le procédé consiste fondamentalement à déposer sur une première plaquette, par exemple en verre, un cadre, par exemple sous forme de cordon en un matériau d'assemblage, en ménageant un orifice de remplissage dans le cadre, puis à faire adhérer une deuxième plaquette sur le cadre par pression, et éventuellement chauffage de toute sa surface, l'espace entre les deux plaquettes étant maintenu constant par des espaceurs rigides (billes ou bâtonnets de verre) déposés à l'intérieur du cadre.

Le matériau liquide est introduit dans l'enceinte en effectuant un vide préalable ou par aspiration. Certains procédés sont proposés pour remplir en une seule opération plusieurs cellules, soit en les empilant, soit en découpant dans le lot de fabrication une bande de cellules ayant toutes leurs orifices alignés. Dans l'un ou l'autre cas, la dernière étape de fabrication nécessite toujours un traitement individuel des cellules pour la mise en place des bouchons de scellement, généralement formés en un matériau différent de celui qui a servi à fabriquer le cadre.

Dans la demande de brevet japonais JP 61-217018, le procédé décrit permet d'effectuer en une seule fois le remplissage de quatre cellules disposées en étoile, les orifices de remplissage étant dirigés vers le centre où a été pratiqué un perçage dans l'une des plaquettes pour permettre d'introduire le matériau liquide actif, ledit perçage étant ensuite obturé par un bouchon. Ce procédé a l'inconvénient de nécessiter une opération supplémentaire d'usinage et reste limité quand au nombre de cellules pouvant être obtenues avec une forme géométrique simple.

La présente invention a pour objet un procédé de fabrication permettant de fabriquer un plus grand nombre de cellules, en n'ayant à effectuer qu'une seule opération pour l'obturation de toutes les cellules, c'est-à-dire en ayant un avantage substantiel concernant le coût de chaque cellule.

A cet effet, l'invention a pour objet un procédé de fabrication d'un lot de cellules lamellaires séparables les unes des autres, chaque cellule étant formée par une plaquette inférieure solidaire d'une plaquette supérieure par l'intermédiaire d'un cadre de scellement, l'espacement entre les deux plaquettes étant maintenu constant au moyen de premiers espaceurs rigides de diamètre $d$, le cadre de scellement de chaque cellule étant pourvu d'un orifice d'écartement $e$ devant être obturé après remplissage avec un matériau liquide actif, caractérisé en ce qu'il comprend les étapes consistant à :

- sur un même premier substrat, former avec un matériau thermofusible un premier cordon suivant le tracé des cadres d'au moins une série de cellules, les orifices étant reliés entre eux par des portions de jonction, puis un deuxième cordon sensiblement parallèle auxdites portions de jonction et solidaire du premier cordon par une de ses extrémités pour former une nourrice, lesdits premier et deuxième cordons ayant une section sensiblement uniforme So et une hauteur initiale h;
- déposer uniformément sur tout le premier substrat les premiers espaceurs rigides de diamètre $d$ et uniquement à proximité des orifices des deuxièmes espaceurs rigides, mais destructibles ou déformables de diamètre D tel que h > D > d;
- appliquer sur l'ensemble ainsi formé un deuxième substrat plan déformable, et exercer avec un premier outil une première pression et un chauffage à la température de ramollissement du thermofusible des cordons sur toute la surface pour amener la hauteur desdits cordons à une valeur sensiblement voisine de $d$, à l'exception des portions proches des orifices maintenus à une distance D par les deuxièmes espaceurs, la section So desdits cordons ayant été choisie pour que le fluage du thermofusible n'obture pas totalement les orifices;
- remplir toutes les cellules avec le matériau liquide actif au moyen de la nourrice;
- exercer avec un deuxième outil une deuxième pression sensiblement supérieure à la première et un chauffage à une température au moins égale à la première sur les zones situées au-dessus des orifices, pour amener la hauteur des cordons à une valeur égale à $d$, la section So desdits cordons ayant été choisie pour que le fluage du thermofusible lors de cette deuxième pression obture totalement les orifices; et

- séparer chaque cellule du lot de fabrication par découpe.

Le cordon déposé sur le premier substrat n'a généralement pas à avoir une section de forme géométrique bien définie, mais par commodité pour la suite de la description, on considère qu'il a une section rectangulaire de largeur $\underline{l}$ et que le matériau thermofusible qui le constitue est déformable de façon isotrope lorsqu'on exerce une pression.

Dans ce cas, on montre facilement que l'écartement initial $\underline{e}$ des orifices de remplissage en matériau liquide actif doit être tel que

$$\frac{l(h - d)}{d} > e > \frac{l(h - D)}{D}$$

Les valeurs respectives de h, D et d peuvent être choisies de façon quelconque à condition de respecter la relation h > D > d. Selon un mode de réalisation préféré, on choisit h ≥ 1,2D et D ≥ 1,5d.

Les cellules peuvent avoir a priori une forme ou une disposition quelconque, mais elles ont généralement une forme géométrique simple, rectangulaire ou circulaire. Lorsque les cellules sont rectangulaires, leurs orifices sont sur un même alignement et le deuxième cordon servant à former la nourrice est alors parallèle à l'alignement des orifices. Lorsque les cellules sont circulaires, la nourrice peut avoir une forme ondulée si les rangées de cellules sont disposées en quinconce pour utiliser au mieux toute la surface du substrat. Le deuxième cordon peut également être conformé comme le premier, les orifices de toutes les cellules débouchant alors dans un canal central formant la nourrice. On observera également que le même substrat peut supporter plusieurs alignements simples ou doubles de cellules, les ouvertures des nourrices étant alors orientées dans la même direction. Ainsi, avec une plaque de verre ayant par exemple pour dimensions 177,8 x 177,8 mm, il est possible de fabriquer un grand nombre de cellules en n'ayant à effectuer qu'une seule opération de remplissage et surtout une seule opération d'obturation.

Les espaceurs de dimension $\underline{d}$, destinés à maintenir constante la distance entre les deux plaquettes, sont généralement formés par des billes ou des bâtonnets de verre, et la pression exercée lors de l'assemblage est contrôlée pour ne pas briser lesdits espaceurs. Les espaceurs de dimension D, localisés au voisinage des orifices, sont réalisés en un matériau ayant une résistance à la pression au moins égale à celle des espaceurs de dimension d, mais pouvant être brisés lorsqu'on donne à la deuxième pression, de préférence localisée à l'endroit où sont les espaceurs de diamètre D, une valeur supérieure à la première.

En contrôlant le paramètre de température, il est possible de choisir pour les espaceurs de dimension D un matériau qui ne sera pas affecté par la température appliquée lors de la première pression, mais qui sera déformé en exerçant localement la deuxième pression à une température supérieure à la première. Ces deuxièmes espaceurs sont par exemple réalisés avec un autre matériau thermofusible ayant un point de ramollissement plus élevé que le matériau thermofusible des cadres. Il existe en effet sur le marché une gamme très étendue de thermofusibles, parmi lesquels il est possible de choisir deux composés dont les points de ramollissement diffèrent d'au moins 30°C.

Les deuxièmes espaceurs disposés à proximité des ouvertures doivent être de préférence à l'extérieur des cadres et peuvent être placés, par exemple, soit à l'intérieur de la nourrice, soit à l'extérieur de l'espace formé par les cadres et la nourrice. Pour maintenir lesdits espaceurs à l'emplacement désiré, on peut les incorporer dans une pâte.

Comme on le voit, le procédé selon l'invention nécessite d'utiliser successivement deux outils permettant de contrôler la pression et la température appliquées. Il est notamment nécessaire que le premier outil comporte des moyens permettant d'obtenir des épaisseurs différentes selon le type d'espaceurs ou selon différentes zones du substrat.

D'autres caractéristiques et avantages de la présente invention apparaîtront à la lecture de la description suivante d'une forme de mise en oeuvre du procédé, présentée à titre d'exemple, en référence aux dessins annexés dans lesquels :

- la figure 1 est une vue de dessus d'une série de cellules dans un lot de fabrication;
- les figures 2a, 2b et 2c représentent différentes étapes du procédé de fabrication au niveau de la coupe II-II de la figure 1; et
- la figure 3 est une vue en perspective agrandie de la zone III de la figure 1 avant l'étape d'obturation des cellules.

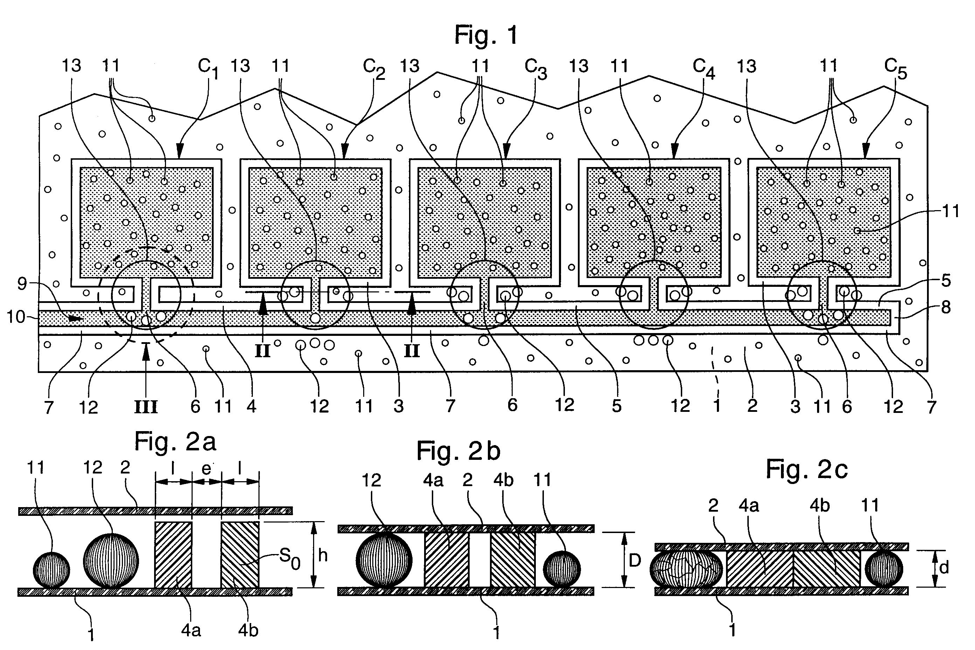

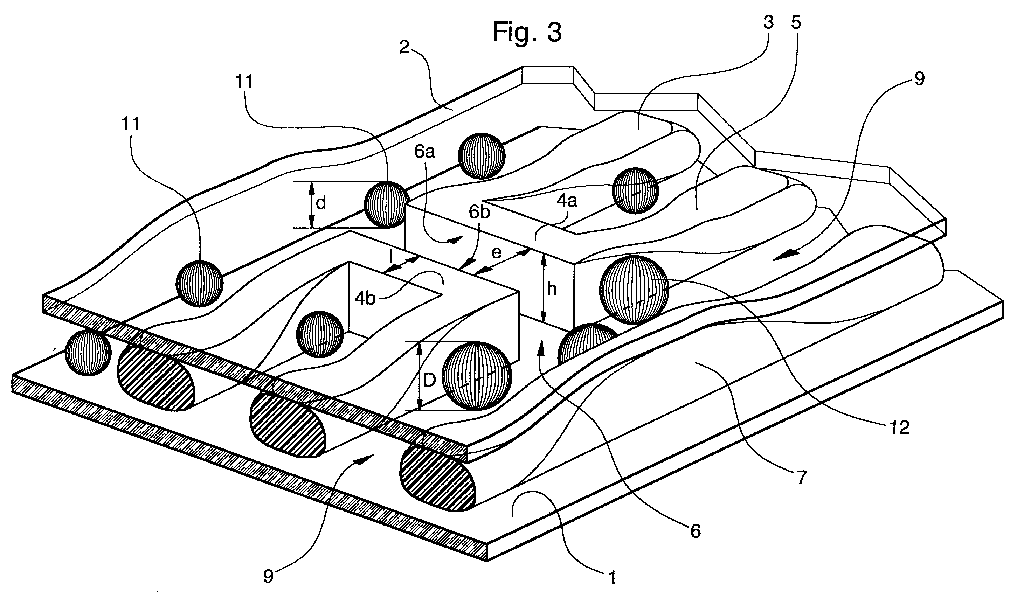

En se référant aux figures 1 et 3, on a représenté une série de cinq cellules $C_1$ à $C_5$ toutes identiques, de forme rectangulaire et dont les cadres 3 formés par un même premier cordon sont disposés sur un substrat commun 1 constitué par une plaque de verre mince ayant environ 0,3 mm d'épaisseur. Les cadres 3 sont pourvus d'orifices 6 d'écartement $\underline{e}$, lesdits orifices étant prolongés par des couloirs formés par des portions 4a et 4b du premier cordon et sont reliés les uns aux autres par des portions de jonction 5 formant avec les cadres 3 un cordon continu. Ce cordon est constitué par un matériau thermofusible de section sensiblement constante So, déposé par extrusion à chaud sur une épaisseur $\underline{h}$. Comme matériau thermofusible, on choisira par exemple le produit Surlyn AD-2® disponible chez Du Pont et ayant pour point de ramollissement 92°C. De la même façon, on réalise un deuxième cordon 7 sensiblement parallèle aux portions de jonction 5

et solidaire du premier cordon 3, 4a, 4b, 5 par son extrémité 8 pour former une nourrice 9 dans laquelle débouchent les orifices 6 des cellules $C_1$ à $C_5$ et dont l'unique ouverture 10 est située au bord du substrat 1. Les cordons ont par exemple une hauteur $\underline{h}$ = 30 µm, une largeur I = 200 µm et les orifices un écartement $\underline{e}$ de l'ordre de 300 µm.

On dépose alors sur tout le substrat 1 des premiers espaceurs 11 formés par des billes de verre de diamètre $\underline{d}$. De façon équivalente, on pourrait utiliser des bâtonnets de diamètre $\underline{d}$. On dépose ensuite à l'extérieur des cadres et à proximité des orifices 6 des deuxièmes espaceurs 12 formés par des sphères de diamètre D. Pour la cellule $C_1$ ces deuxièmes espaceurs 12 sont représentés dans la nourrice 9. Pour la cellule $C_3$, ils sont représentés à l'extérieur de la nourrice. Pour avoir des espaceurs rigides mais destructibles, on utilisera par exemple des billes de verre. Pour avoir des espaceurs rigides mais thermodéformable, on utilisera par exemple un autre matériau thermofusible ayant un point de ramollissement supérieur à celui du matériau du cadre. Dans l'exemple décrit, on pourra choisir le produit Polybond 1009® disponible chez Uniroyal et ayant pour point de ramollissement 122°C. Pour maintenir ces deuxièmes espaceurs 12 à l'emplacement voulu pendant tout le processus de fabrication on peut les incorporer dans une pâte. Les petits espaceurs 11 ont par exemple un diamètre d = 10 µm et les grands espaceurs un diamètre D = 20 µm, de sorte qu'on ait D ≥ 1,5d et h ≥ 1,2D. Ce stade du procédé est schématiquement représenté à la figure 2a.

Dans l'étape suivante, on applique sur la structure ainsi formé un deuxième substrat 2 plan déformable, par exemple une autre plaque de verre de 0,3 mm d'épaisseur, ou un matériau plastique semi-rigide, puis on exerce une pression en chauffant à la température de ramollissement du thermofusible du cadre à l'aide par exemple d'un outil métallique plan comportant des évidements au niveau de zones 13 situées au-dessus des orifices 6 de chaque cellule. Sous l'effet de la pression et du chauffage, l'épaisseur initiale h des cordons est ramenée en tout point à une valeur voisine de $\underline{d}$, sauf au niveau des orifices 6 maintenus ouverts par les espaceurs 12 d'épaisseur D comme cela est représenté à la figure 2. Selon des moyens connus, la pression peut être contrôlée jusqu'au moment où la face interne du deuxième substrat 2 vient au plus en contact avec les espaceurs 11 d'épaisseur d, la pression étant alors relâchée après avoir mis en oeuvre des moyens de refroidissement. Dans cette étape du procédé, le thermofusible a flué, en entraînant un rétrécissement des orifices 6, sans toutefois les obturer totalement, comme cela est schématiquement représenté à la figure 2b. On a ainsi créé un espace formé par les enceintes des cellules $C_1$ à $C_5$ et la nourrice 9, qui ne communique avec l'extérieur qu'au moyen de l'ouverture 10.

On introduit ensuite le matériau liquide actif à travers l'ouverture 10 selon l'un des procédés connus pour le remplissage d'une seule cellule.

L'étape suivante, schématiquement représenté à la figure 2c, permet d'obturer en une seule fois toutes les cellules. A cet effet, on applique un deuxième outil dont on peut contrôler la température et la pression au niveau des zones 13 situées au-dessus des orifices 6. Lorsque les deuxièmes espaceurs 12 sont destructibles, la température de l'outil est réglée au point de ramollissement du matériau thermofusible des cordons et la pression exercée est supérieure à la pression de rupture des deuxièmes espaceurs 12, ladite pression étant relâchée après refroidissement lorsque la zone 13 de la face interne du deuxième substrat vient en contact avec les espaceurs 11. Lorsque les deuxièmes espaceurs 12 sont thermodéformables, la température de l'outil au-dessus de la zone 13 est réglée à la température de ramollissement du matériau dans lequel sont fabriqués lesdits deuxièmes espaceurs, la pression étant relâchée après refroidissement comme indiqué précédemment. Dans l'un ou l'autre cas, l'obturation de chaque cellule est obtenue par le fluage des parois 6a et 6b en regard du cordon formant couloir au niveau de chaque orifice 6. Si on considère que cette déformation est isotrope, on obtiendra l'obturation totale souhaitée en donnant au couloir une largeur dont on peut calculer les limites théoriques, inférieure et supérieure, comme indiqué précédemment.

La dernière étape consiste à découper selon des procédés connus les cellules formées en suivant le contour extérieur de chaque cadre.

Comme cela a été indiqué au début, le deuxième cordon 7 pourrait également comporter les orifices de remplissage d'une deuxième série de cellules.

De même, un lot de fabrication peut comporter plusieurs nourrices pour des séries simples ou doubles de cellules, les ouvertures de toutes les nourrices étant alignées sur un même bord du substrat 1.

De ce procédé de fabrication, il en découle que les cellules lamellaires ainsi obtenues se caractérisent par le fait que le moyen d'obturation des orifices de remplissage n'est pas un bouchon rapporté, mais le matériau même du cadran après fluage.

## Revendications

1. Procédé de fabrication d'un lot de cellules lamellaires séparables les unes des autres, chaque cellule étant formée par une plaquette inférieure solidaire d'une plaquette supérieure par l'intermédiaire d'un cadre de scellement, l'espacement entre les deux plaquettes étant maintenu constant au moyen de premiers espaceurs (11) rigides de diamètre $\underline{d}$, le cadre de scellement de chaque cellule étant pourvu d'un orifice (6) d'écartement $\underline{e}$ devant être obturé après remplissage avec un matériau liquide actif, caractérisé en ce qu'il comprend les étapes consistant à :

- sur un même premier substrat (1), former avec un matériau thermofusible un premier cordon suivant le tracé des cadres (3) d'au moins une série de cellules ($C_1$ à $C_5$), les orifices (6) étant reliés entre eux par des portions de jonction (5), puis un deuxième cordon (7) sensiblement parallèle auxdites portions de jonction (5) et solidaire du premier cordon par une de ses extrémités (8) pour former une nourrice (9), lesdits premier et deuxième cordons ayant une section sensiblement uniforme So et une hauteur initiale h;
- déposer uniformément sur tout le premier substrat les premiers espaceurs (11) rigides de diamètre $\underline{d}$ et uniquement à proximité des orifices (6) des deuxièmes espaceurs (12) rigides, mais destructibles ou déformables de diamètre D tel que h > D > d;
- appliquer sur l'ensemble ainsi formé un deuxième substrat plan (2) déformable, et exercer avec un premier outil une première pression et un chauffage à la température de ramollissement du thermofusible des cordons sur toute la surface pour amener la hauteur desdits cordons à une valeur sensiblement voisine de $\underline{d}$, à l'exception des portions proches des orifices maintenus à une distance D par les deuxièmes espaceurs, la section So desdits cordons ayant été choisie pour que le fluage du thermofusible n'obture pas totalement les orifices (6);
- remplir toutes les cellules avec le matériau liquide actif au moyen de la nourrice (9);
- exercer avec un deuxième outil une deuxième pression sensiblement supérieure à la première et un chauffage à une température au moins égale à la première sur les zones (13) situées au-dessus des orifices (6), pour amener la hauteur des cordons à une valeur égale à $\underline{d}$, la section So desdits cordons ayant été choisie pour que le fluage du thermofusible à l'épaisseur $\underline{d}$ lors de cette deuxième pression obture totalement les orifices (6); et
- séparer chaque cellule du lot de fabrication par découpe.

2. Procédé de fabrication selon la revendication 1, caractérisé en ce que les cordons ont une section So rectangulaire ou carrée de largeur $\underline{l}$ et en ce que l'écartement initial $\underline{e}$ des orifices (6) doit être tel que

$$\frac{l(h-d)}{d} > e > \frac{l(h-D)}{D}.$$

3. Procédé de fabrication selon les revendications 1 ou 2, caractérisé en ce que h ≥ 1,2D et D ≥ 1,5d.

4. Procédé de fabrication selon la revendication 1, caractérisé en ce que le deuxième cordon (7) de matériau thermofusible est conformé comme le premier cordon pour une autre série de cellules, les orifices (6) de toutes les cellules débouchant dans la nourrice (9) située en position médiane.

5. Procédé de fabrication selon la revendication 1 ou 4, caractérisé en ce qu'une même lot de fabrication comporte plusieurs séries simples ou doubles de cellules.

6. Procédé de fabrication selon la revendication 1, caractérisé en ce que les deuxièmes espaceurs (12) de diamètre D sont réalisés en un matériau rigide ayant une résistance telle que lesdits deuxièmes espaceurs (12) résistent à la première pression, mais sont brisés par la deuxième pression de valeur supérieure.

7. Procédé de fabrication selon la revendication 6, caractérisé en ce que les premiers (11) et deuxièmes (12) espaceurs sont réalisés dans le même matériau et en ce que la deuxième pression est arrêtée lorsque l'écartement entre le premier et le deuxième substrat a la valeur $\underline{d}$.

8. Procédé de fabrication selon la revendication 1, caractérisé en ce que les deuxièmes espaceurs (12) sont réalisés en un matériau rigide mais déformable lorsque la deuxième pression a une valeur supérieure à la première.

9. Procédé de fabrication selon la revendication 8, caractérisé en ce que le matériau utilisé pour les deuxièmes espaceurs (12) est un matériau thermofusible ayant une température de ramollissement supérieure à celle du matériau thermofusible utilisé pour les deux cordons, et en ce que la température appliquée lors de la deuxième pression est supérieure à celle de la première pression.

10. Procédé selon la revendication 1, caractérisé en ce que les deuxièmes espaceurs (12) sont incorporés dans une pâte.

11. Procédé de fabrication selon la revendication 1, caractérisé en ce que le premier outil comporte des évidements ayant la même répartition que les orifices des cellules dans le lot de fabrication.

12. Cellule lamellaire obtenue selon le procédé de la revendication 1, caractérisée en ce que l'orifice de remplissage est obturé par le fluage du matériau thermofusible formant le cadre de ladite cellule.

Fig. 1

Fig. 2a

Fig. 2b

Fig. 2c

Fig. 3

**RAPPORT DE RECHERCHE EUROPEENNE**

Numéro de la demande

EP 97 11 1429

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DATABASE WPI<br>Section PQ, Week 9638<br>Derwent Publications Ltd., London, GB;<br>Class P81, AN 96-380231<br>XP002049478<br>& JP 08 184 840 A (CASIO COMPUTER CO LTD), 16 juillet 1996<br>* abrégé * | 1,5 | G02F1/1341<br>G02F1/161 |
| A | PATENT ABSTRACTS OF JAPAN<br>vol. 096, no. 004, 30 avril 1996<br>& JP 07 318955 A (MITSUBISHI ELECTRIC CORP ET AL), 8 décembre 1995,<br>* abrégé * | 1,5 | |
| A | US 5 464 490 A (SATO KAZUHITO ET AL) 7 novembre 1995<br>* le document en entier * | 1,5 | |
| A,D | PATENT ABSTRACTS OF JAPAN<br>vol. 011, no. 049 (P-547), 14 février 1987<br>& JP 61 217018 A (SHARP CORP), 26 septembre 1986,<br>* abrégé * | 1,5 | DOMAINES TECHNIQUES RECHERCHES (Int.Cl.6)<br><br>G02F |

Le présent rapport a été établi pour toutes les revendications

| Lieu de la recherche | Date d'achèvement de la recherche | Examinateur |
|---|---|---|
| LA HAYE | 8 décembre 1997 | Iasevoli, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)